# EUROPÄISCHE PATENTSCHRIFT

(11) **EP 1 685 064 B1**
(45) Veröffentlichungstag und Bekanntmachung des Hinweises auf die Patenterteilung: **04.07.2007**
(21) Anmeldenummer: 04765622.8
(22) Anmeldetag: 25.09.2004
(51) Int. Cl.: C01B 31/12, C09C 1/00

(54) **TEILCHENVERBUND, VERFAHREN ZU DEREN HERSTELLUNG UND DEREN VERWENDUNG**
PARTICLE COMPOSITE, METHOD FOR THE PRODUCTION AND USE THEREOF
AMAS DE PARTICULES, LEUR PROCEDE DE PRODUCTION ET LEUR UTILISATION

(30) Priorität: 14.11.2003 DE 10353555
(43) Veröffentlichungstag der Anmeldung: 02.08.2006
(73) Patentinhaber: Carl Freudenberg KG, 69469 Weinheim (DE)
(72) Erfinder: RÜHLE, Thomas, 69469 Weinheim (DE); SCHUBERT, Dirk, 69493 Leutershausen (DE); HENKE, Jürgen, 68519 Viernheim (DE); GRUBER, Achim, 69250 Schönau (DE); GRUN, Gregor, 69469 Weinheim (DE)
(86) Internationale Anmeldenummer: PCT/EP2004/010792
(87) Internationale Veröffentlichungsnummer: WO 2005/049489

(56) Entgegenhaltungen:
- DE-A- 2 544 218
- FR-A- 2 732 330
- US-A- 5 184 779

## Beschreibung

Die vorliegende Erfindung betrifft auf ausgewählten Trägerteilchen aufgebrachte ultrafeine Partikel, ein Verfahren zur Herstellung der Teilchenverbunde Materialien sowie deren Verwendung als Füllstoffe für Polymere oder als Katalysatoren für vernetzbare Polymere sowie als Stabilisatoren in Polymeren.

Beim Einsatz von ultrafeinen Partikeln in Polymeren, insbesondere in Elastomeren oder Thermoplasten, oder in Schmierfetten ist die optimale Verteilung der Partikel sehr wichtig, um deren Potential möglichst gut ausnutzen zu können. Durch den Eintrag von mechanischer Energie lässt sich dieses Ziel nur in Ausnahmefällen realisieren.

Aus dem Bereich der heterogenen Katalyse sind Verfahren zur Herstellung ultrafeiner Partikel auf keramischen und kohlenstoff-basierten Trägem bekannt. Wie z.B. bei C. Prado-Burguete et al. in Journal of Catalysis 128 (1991) 397-404 beschrieben, können durch Imprägnierung von Rußen mit Hexachloroplatinsäure und anschließende Oxidation mit Sauerstoff und Reduktion mit Wasserstoff je nach gewählten Präparations- und Reaktionsbedingungen ultrafeine Platinpartikel mit 1-10 nm Durchmesser erhalten werden. Eine etwaige vorherige Aktivierung der Träger findet hier in der Regel unter einer bestimmten Gasatmosphäre bei erhöhten Temperaturen statt.

In der US-A-6,146,454 wird ein Verfahren zur Herstellung gefällter Kieselsäuren beschrieben, die sich als Füllstoffe in Elastomeren einsetzen lassen. Die gefällten Kieselsäuren weisen einen Zinkgehalt von 1 bis 5 Gew. % auf, liegen in kugelförmiger Gestalt vor und sind durch eine Reihe weiterer physikalischer Parameter gekennzeichnet. Als Trägermaterialien werden kugelförmige Kieselgele mit mittleren Durchmessern von mehr als 80 µm verwendet. In dem Patent finden sich keine näheren Angaben über den Ort, an dem das Zink sich in diesen Teilchen befindet.

Die EP-A-475,046 beschreibt ein Verfahren zur Herstellung von aus Zinkoxid und Kieselsäure bestehenden Granulaten, die durch Fällung von Zinkoxid und Kieselsäure erhalten werden. Die Granulate lassen sich gut in Kautschukmischungen dispergieren.

Aus der DE-A-25 44 218 ist ein Verfahren zur Herstellung von zinkoxidhaltigen Füllstoffen bekannt.

Ausgehend von diesem Stand der Technik liegt der vorliegenden Erfindung die Aufgabe zugrunde, einen Füllstoff für Polymere bereitzustellen, der bei vergleichbaren Eigenschaften einen deutlich reduzierten Gehalt an aktivem Material, insbesondere einen reduzierten Schwermetallgehalt aufweist.

Eine weitere Aufgabe bestand in der Bereitstellung eines Füllstoffes, mit dem das Alterungsverhalten von Polymeren, insbesondere von Elastomeren, drastisch verbessert ist und mit dem ein mechanisches Wertebild erzielt werden kann, das auch mit deutlich erhöhtem Füllgrad klassischer Additive nicht erreicht wird.

Noch eine weitere Aufgabe bestand in der Bereitstellung eines geträgerten Katalysators für chemische Reaktionen, dessen Aktivität mit bekannten geträgerten Katalysatoren deutlich erhöht ist.

Eine weitere Aufgabe bestand in der Bereitstellung von Verfahren zur Herstellung dieser geträgerten Katalysatoren, die einfach durchzuführen sind und reproduzierbare Ergebnisse liefern.

Die vorliegende Erfindung betrifft einen Teilchenverbund aufgebaut aus Trägerteilchen eines mittleren Durchmessers von weniger als 5 µm, die mit einer Schicht aus oxidischem Material mit irregulärer Oberfläche umhüllt sind, auf der Teilchen aus aktivem Material mit einem mittleren Durchmesser von weniger als 1 µm aufgebracht sind.

Die vorliegende Erfindung betrifft ferner ein Verfahren zur Herstellung der oben definierten Teilchenverbunde umfassend die Maßnahmen:
i) Erzeugen einer Schicht einer silizium-, aluminium-, erdalkali-, und/oder alkali-aufweisenden Vorläufersubstanz enthaltend mindestens einen organischen Rest auf Trägerteilchen eines mittleren Durchmessers von weniger als 5 µm,
ii) thermische Zersetzung der Vorläufersubstanz auf den beschichteten Trägerteilchen zur Erzeugung einer die Trägerteilchen umhüllenden Schicht aus oxidischem Material mit irregulärer Oberfläche, und
iii) Aufbringen von Teilchen aus aktivem Material mit einem mittleren Durchmesser von weniger als 1 µm oder von Vorläufern dieser Teilchen auf die Oberfläche der beschichteten Trägerteilchen, wobei
iv) im Falle des Aufbringens von Vorläufern von Teilchen aus aktivem Material auf die Oberfläche der beschichteten Trägerteilchen die aktiven Teilchen durch thermische Behandlung des Teilchenverbundes erzeugt werden.

Die Erfindung betrifft ferner ein Verfahren zur Herstellung der oben definierten Teilchenverbunde umfassend die Maßnahmen:
i) Erzeugen einer Schicht einer silizium-, aluminium-, erdalkali- und/oder alkali-aufweisenden Vorläufersubstanz enthaltend mindestens einen organischen Rest auf Trägerteilchen eines mittleren Durchmessers von weniger als 5 µm,
v) Aufbringen von Teilchen aus aktivem Material mit einem mittleren Durchmesser von weniger als 1 µm oder von Vorläufern dieser Teilchen auf die mit Vorläufersubstanz beschichteten Oberfläche der Trägerteilchen, und
vi) thermische Zersetzung der Vorläufersubstanz auf den beschichteten Trägerteilchen zur Erzeugung einer die Trägerteilchen umhüllenden Schicht aus oxidischem Material mit irregulärer Oberfläche, und gegebenenfalls zur Erzeugung von Teilchen aus aktivem Material mit einem mittleren Durchmesser von weniger als 1 µm aus den Vorläufern dieser Teilchen.

Als Trägerteilchen für die erfindungsgemäßen Teilchenverbunden können beliebige Materialien eingesetzt werden. Diese können beliebige Gestalt aufweisen, beispielsweise rund, ellipsoid, irregulär oder in Form von Fasern. Es handelt sich allerdings um feinteilige Teilchen mit einem mittleren Durchmesser von weniger als 5 µm, vorzugsweise von 0,1 bis 1 µm (bestimmt mittels Elektronenmikroskopie). Im Falle des Einsatzes von Fasern reicht es aus, wenn diese in nur einer Dimension einen mittleren Durchmesser (Median) von weniger als 5 µm aufweisen.

Die Trägerteilchen können mittels chemischer oder physikalischer Methoden aktiviert worden sein, beispielsweise durch thermische, chemische oder mechanische Behandlungsweisen, wie Temperung im Ofen, Behandlung mit Säuren oder in der Kugelmühle.

Typische Materialien, aus denen die Trägerteilchen bestehen sind Kohlenstoffe oder Kohlenstoffverbindungen, beispielsweise Ruße, Graphit oder chemisch modifizierter Graphit; sowie oxidische Materialien, wie Siliziumoxid oder Metalloxide, z.B. Aluminiumoxid; oder andere thermisch und mechanisch beständige keramische Materialien, wie z.B. Siliziumnitrid, Siliziumcarbid oder Bornitrid; oder Metallcarbonate, wie Calciumcarbonat, oder Metallsulfide oder -sulfate, wie Calciumsulfat, Bariumsulfat oder Eisensulfid. Auch feinteilige keramische Massen oder organische polymere Materialien können als Trägerteilchen eingesetzt werden. Letztere sind so auszuwählen, dass sie die Temperaturbehandlungen bei der Herstellungen der Teilchenverbunde ohne wesentlichen Abbau oder Zersetzung überstehen.

Als Vorläufersubstanzen zur Erzeugung einer die Trägerteilchen umhüllenden Schicht aus oxidischem Material mit irregulärer Oberfläche können beliebige silizium-, aluminium-, erdalkali- oder alkali-aufweisende Verbindungen eingesetzt werden, die mindestens einen organischen Rest, vorzugsweise einen Alkylrest, der teilweise oder vollständig halogeniert sein kann, enthalten.

Beispiele für Vorläufersubstanzen sind Silane oder Silizium-Halogenverbindungen, die mindestens einen organischen Rest enthalten, wie aliphatische Reste, einschließlich der ethylenisch ungesättigten aliphatischen Reste, aromatische Reste und/oder Carboxylreste, oder aluminium-organische Verbindungen, wie Trialkylaluminium, Dialkylaluminiumhalogenide oder Alkylaluminiumdihalogenide; oder erdalkali-organische Verbindungen, wie Dialkylcalcium oder Alkylcalciumchlorid; oder alkali-organische Verbindungen, wie Alkyllithium, Alkylnatrium oder Alkylkalium, organische Sandwichverbindungen (Metallocene) oder Metallcarbonyle.

Aus den Vorläufersubstanzen wird durch gezielte thermische Alterung eine Schicht aus oxidischen Materialien erzeugt, die sich durch eine starke Zerklüftung der Oberfläche auszeichnet. Dies führt zusätzlich zu einer gegebenenfalls bereits bestehenden unregelmäßigen Oberfläche der Trägerteilchen zu einer Vergrößerung der Oberfläche der Teilchen. Dieses äußert sich in einer Vergrößerung der spezifischen Oberfläche nach der thermischen Behandlung der mit Vorläufersubstanz beschichten Trägerteilchen.

In der Regel vergrößert sich die spezifische Oberfläche (ermittelt nach der B.E.T. Methode) durch die thermische Behandlung um mindestens 10 %,vorzugsweise um mindestens 25 %. Ohne an theoretische Überlegungen gebunden zu sein wird angenommen, dass durch die Zersetzung der organischen Reste der Vorläufersubstanz(en) in der äußeren Schicht Poren und/oder Senken entstehen, an bzw. in denen die ultrafeinen Teilchen aus aktivem Material sich ansammeln. Infolge der Anordnung dieser Teilchen auf der Oberfläche ist es möglich, deren Gehalt abzusenken und immer noch die gewünschten Effekte, beispielsweise katalytische oder stabilisierende Eigenschaften zu erhalten.

Unter "irregulärer Oberfläche" wird im Rahmen dieser Beschreibung eine Oberfläche verstanden, die von der Gestalt einer idealen Kugeloberfläche oder der idealen Oberfläche einer sonstigen rotationssymmetrischen Form abweicht. Ohne an theoretische Überlegungen gebunden zu sein kann man dieses anhand des folgenden Modells verdeutlichen. Erzeugt man auf einer regulären Kugeloberfläche lauter kleine Halbkugeln mit einem Radius, der deutlich kleiner ist, als der Radius der großen Kugel, so dass eine einem Golfball ähnliche Oberfläche entsteht, so kann man die Oberfläche bei konstantem Radius der Kugel theoretisch auf das mindest 1,8-fache erhöhen.

Die erfindungsgemäß erzeugten Oberflächen sind stark zerklüftet, d.h. sie weisen Poren und/oder Senken auf, welche durch die Schwindung der thermisch labilen Vorläufersubstanz (Kalzinierung) entstehen.

Als Teilchen aus aktivem Material, die auf der Oberfläche der erfindungsgemäßen Teilchenverbunde adsorbiert oder anderweitig fixiert sind, können Teilchen aus beliebigen Materialien eingesetzt werden. Diese können beliebige Gestalt aufweisen, beispielsweise rund, ellipsoid oder irregulär. Es handelt sich allerdings um feinteilige Teilchen mit einem mittleren Durchmesser von weniger als 1 µm, bestimmt mit Hilfe von Elektronenmikroskopie und der B.E.T. Methode, vorzugsweise von 0,01 bis 0,5 µm. Die Teilchen aus aktivem Material in den erfindungsgemäßen Verbundteilchen sind deutlich kleiner als die jeweiligen Trägerteilchen. Typischerweise beträgt das Verhältnis der mittleren Durchmesser von Teilchen aus aktivem Material zum mittleren Durchmesser des Trägerteilchens weniger als 1 : 10, vorzugsweise 1: 10 bis 1 : 1000.

Es wird angenommen, dass die Teilchen aus aktivem Material in den Poren oder Senken der zerklüfteten Oberfläche eingelagert sind, so dass sie aus der Umgebung des Teilchenverbundes frei zugänglich sind.

Als aktive Materialien sind sämtliche Stoffe einsetzbar, mit denen eine gewünschte Eigenschaft eines Substrates beeinflusst werden kann.

Typischerweise handelt es sich bei dem aktiven Material um ein Metall, einschließlich der Metalllegierungen, um einen Halbleiter und/oder um Verbindungen dieser Materialien, insbesondere um Chalkogenide, Nitride oder Carbide von Metallen.

Bevorzugt werden Metalle oder Halbleiter, insbesondere Magnesium, Kalzium, Barium, Titan, Mangan, Eisen, Kupfer, Zink, Silber, Gold, Platin, Zirkonium, Yttrium, Aluminium, Silizium und Zinn.

Ebenfalls bevorzugt werden Metalloxide, insbesondere Zinkoxid.

Besonders bevorzugt werden Teilchenverbunde, bei denen das Trägerteilchen einen mittleren Durchmesser von 0,1 bis 1,0 µm (D₅₀) aufweist und bei denen die Teilchen aus aktivem Material einen mittleren Durchmesser von 1 bis 1.000 nm (D₅₀) aufweisen, mit der Massgabe, dass das Verhältnis des mittleren Durchmessers der Trägerteilchen zum mittleren Durchmesser der Teilchen aus aktivem Material unterhalb von 1 : 0,5, vorzugsweise zwischen 1 : 0,01 bis 1 : 0,1, beträgt.

Die Herstellung der erfindungsgemäßen Teilchenverbunde kann nach den oben beschriebenen Verfahren erfolgen.

Erfindungsgemäß wird das Trägermaterial mit einer geeigneten thermolabilen Substanz beschichtet. Sodann wird die Schicht aus der thermolabilen Substanz thermisch behandelt, so dass durch Zersetzung dieser thermolabilen Substanz unter Erhalt der Schicht eine Vergrößerung der Oberfläche des beschichteten Trägers erfolgt und sodann werden die ultrafeinen Partikel aus aktivem Material auf die vergrößerte Oberfläche aufgebracht.

Anstelle dieser Vorgehensweise kann das Trägermaterial mit einer geeigneten thermolabilen Substanz beschichtet werden und danach werden ultrafeine Partikel oder geeignete Vorläufersubstanzen für ultrafeine Partikel in geeigneter Weise auf die Oberfläche der Beschichtung aufgebracht. Es schließt sich eine thermische Behandlung an, um die thermolabile Substanz unter Erhalt der Schicht zur Vergrößerung der Oberfläche zu zersetzen und um aus den adsorbierten Vorläufersubstanzen die aktive Phase zu erzeugen.

Als Trägermaterialien können die oben beschriebenen Materialien ausgewählt werden. Diese Trägermaterialien müssen in feiner Verteilung vorliegen; d.h. die mittlere Teilchengröße (ermittelt gemäß Raster-Elektronenmikroskopie ("REM")) muss weniger als 5 µm betragen.

Als thermolabile Substanzen können die oben beschriebenen Materialien ausgewählt werden. Trägermaterialien und thermolabile Substanzen sind im Einzelfall so zu wählen, dass die Dimensionen des Trägermaterials bei der erforderlichen Temperatur der thermischen Behandlung sich nicht oder weniger als 5 % verändern.

Die thermolabilen Substanzen werden mittels an sich bekannter Verfahren auf die Oberfläche des Trägermaterials aufgebracht. Beispiele dafür sind das Imprägnieren der Oberfläche des Trägermaterials mit der thermolabilen Substanz oder einem Gemisch thermolabiler Substanzen oder das direkte Aufbringen von thermolabilen Substanzen auf dem Trägermaterial durch einfaches Mischen beider Komponenten. Über die Konzentration in der Imprägnierlösung oder Imprägniersuspension bzw. -emulsion kann die Dicke der entstehenden Schicht in bekannter Weise eingestellt werden. Typische Schichtdicken der Schicht aus thermolabiler Substanz auf dem Trägermaterial liegen im Bereich von 10 bis 1000 nm, vorzugsweise 2 bis 100 nm.

Die Bildung der Schicht kann durch Gleichgewichtsadsorption erfolgen. Dabei werden die Trägermaterialien in einer Lösung, Suspension oder Emulsion von thermolabilen Substanzen suspendiert und die Beladung der Trägermaterialien wird über die angebotene Konzentration gesteuert, deren Optimum beispielsweise aus einer Adsorptionsisotherme ermittelt wird.

Eine weitere Schichtbildungsmethode ist die sogenannte "Incipient Wettness" Methode. Hier wird aus dem Trägermaterial zusammen mit der Lösung, Suspension oder Emulsion der Vorläufersubstanz der aktiven Phase und der thermolabilen Substanz eine pastöse Masse hergestellt. Die Beladung lässt sich über die Menge der in der Lösung, Suspension oder Emulsion enthaltenen thermolabilen Substanz steuern und kann durch mehrfache Wiederholung gegebenenfalls erhöht werden.

Das beschichtete Trägermaterial wird anschließend an Luft getrocknet. Typische Trocknungszeiten betragen mindestens sechs, vorzugsweise mindestens zwölf Stunden. Die Trocknungstemperatur wird je nach thermischer Beständigkeit der adsorbierten Substanz zwischen 50 und 150°C gewählt.

Die thermolabile Substanz kann auf der Oberfläche des Trägermaterials adsorbiert sein oder auch kovalent mit der Oberfläche verbunden sein, beispielsweise durch Einsatz von Alkylsiliziumhalogenverbindungen.

Die Aufbringung der thermolabilen Substanz kann vorteilhafterweise durch Imprägnieren des Trägermaterials mit einer Lösung in einem organischen Lösungsmittel oder vorzugsweise in Wasser erfolgen.

Die thermische Behandlung erfolgt üblicherweise an Luft oder unter einer künstlichen sauerstoffhaltigen Atmosphäre. Die Behandlungsdauer ist ausreichend lang zu wählen, um aus den adsorbierten thermolabilen Substanzen die vergrößerte Oberfläche Phase zu erzeugen. Typische Behandlungsdauern betragen mehr als sechs, vorzugsweise mehr als zwölf Stunden, insbesondere zwölf bis vierundzwanzig Stunden. Die Auswahl der Temperaturen richtet sich nach der Art des thermolabilen Materials und der eingesetzten Atmosphäre. Die Temperatur ist so zu wählen, dass durch die Behandlung eine zumindest teilweise Zersetzung der thermolabilen Substanz erfolgt. In der Regel werden dabei die organischen Reste zersetzt und es bilden sich Hohlräume und Zerklüftungen der Oberfläche der Schicht aus thermolabilem Material aus. Gleichzeitig erfolgt eine Oxidation des Materials dieser Schicht. Die Schicht ändert sich somit bleibt aber als Schicht erhalten. Typische Behandlungstemperaturen bewegen sich im Bereich von 150 bis 500°C.

Der Fortschritt der Vergrößerung der Oberfläche lässt sich durch Bestimmen der spezifischen Oberfläche des beschichteten Trägermaterials durch an sich bekannte Verfahren verfolgen. Ein Beispiel für ein solches Verfahren ist die Bestimmung nach B.E.T. (Journ. Americ. Chem. Soc., Vol. 60, 309, Feb. 1938).

Überraschenderweise erfolgt durch die thermische Behandlung keine Verringerung der Oberfläche sondern eine Vergrößerung. Es wird angenommen, dass der durch die thermische Behandlung hervorgerufene Effekt der Vergleichmäßigung der Teilchenoberfläche durch die teilweise Zersetzung der thermolabilen Substanz überkompensiert wird.

Nach der thermischen Behandlung der Schicht aus thermolabiler Substanz oder alternativ nach dem Aufbringen dieser Schicht auf das Trägermaterial und vor der thermischen Behandlung der Schicht aus thermolabilem Material wird das beschichtete Trägermaterial mit ultrafeinen Partikeln und/oder Vorläufersubstanzen für ultrafeine Partikel behandelt. Diese setzen sich auf der Oberfläche der Schicht aus thermolabiler Substanz oder aus der bereits thermisch behandelten Schicht fest.

Als aktive Materialien können die oben beschriebenen Substanzen oder deren Vorläufer ausgewählt werden. Trägermaterialien, thermolabile Substanzen und aktive Materialien bzw. deren Vorläufer sind im Einzelfall so zu wählen, dass die Dimensionen des Trägermaterials und des aktiven Materials bei der erforderlichen Temperatur der thermischen Behandlung sich nicht oder weniger als 5 % verändern und dass die thermolabile Substanz und der Vorläufer des aktiven Materials sich bei der Temperatur der thermischen Behandlung verändern. Dabei kann die aktive Phase entweder gleichzeitig mit der Zersetzung der thermolabilen Substanz oder nach deren Zersetzung erzeugt werden.

Die Aufbringung der aktiven Materialien bzw. deren Vorläufer auf die Oberfläche des beschichteten Trägermaterials kann ebenfalls durch an sich bekannte Verfahren erfolgen. Beispiele dafür sind die bereits bei der Beschreibung des Aufbringens der thermolabilen Substanz auf die Oberfläche des Trägermaterials beschriebenen Verfahren, also direktes Aufbringen oder Imprägnieren.

Auch hier kann das Imprägnieren durch Aufbringen aus Lösung, Suspension oder Emulsion erfolgen oder durch die "Incipient Wettness" Methode.

Beispiele für Imprägnierungslösungen enthaltend Vorläufer von Teilchen aus aktiven Materialien sind 0,1-molare bis gesättigte Metallsalzlösungen, beispielsweise Zink-, Magnesium-, Titan-, Calzium-, Eisen- und/oder Bariumsalzlösungen, wobei als Salze vorzugsweise Hydroxide, Carbonate, Carbonsäuresalze, Chloride, Sulfate, Acetylacetonate und/oder Nitrate zum Einsatz kommen. Der pH-Wert der Imprägnierungslösung wird dabei so an das jeweils eingesetzte beschichtete Trägerteilchen angepasst, dass die Adsorption der Vorläufersubstanz auf dem beschichteten Trägerteilchen optimiert wird.

Über die Konzentration in der Imprägnierlösung oder Imprägniersuspension bzw. -emulsion kann die Menge an aufgebrachtem Material eingestellt werden. In diesem Fall wird üblicherweise weniger Material aufgebracht als im Falle der thermolabilen Substanz. Die Ausbildung einer Schicht von aktivem Material ist nicht erforderlich, da sich die ultrafeinen Partikel aus aktivem Material in den Unregelmäßigkeiten der Oberfläche des beschichteten Trägermaterials ablagern sollen.

Die Menge an aktivem Material wird typischerweise so gewählt, dass sich Teilchenverbunde mit einer Beladung von 1 bis 50 Gew. % an aktivem Material ergeben.

Das aktive Material kann bereits in der gewünschten Teilchenform und -verteilung auf die Oberfläche der Schicht aus thermolabilem Material oder auf die bereits thermisch behandelte Oberfläche des beschichteten Trägermaterials aufgebracht werden oder die ultrafeinen Teilchen aus aktivem Material können auf dieser Oberfläche durch thermische Behandlung erzeugt werden.

Dabei sind Behandlungsdauern, Zusammensetzung der Behandlungsatmosphäre und Behandlungstemperaturen so zu wählen, dass sich aus dem entsprechenden Vorläufer das gewünschte aktive Material ergibt. Die adsorbierten Moleküle beginnen bei hinreichend hohen Temperaturen auf der Oberfläche mobil zu werden und zu agglomerieren. Auf diese Weise entstehen immer größer werdende Cluster , die schließlich in ultrafeinen Partikeln münden.

Das mit aktivem Material und/oder mit dessen Vorläufer behandelte beschichtete Trägermaterial wird anschließend an Luft getrocknet. Typische Trocknungszeiten betragen mindestens sechs, vorzugsweise mindestens zwölf Stunden. Die Trocknungstemperatur wird je nach thermischer Beständigkeit der adsorbierten Substanzen zwischen 50 und 150°C gewählt.

Die ultrafeinen Partikel aus aktivem Material sind üblicherweise auf der Oberfläche des beschichteten Trägermaterials adsorbiert und zwar je nach Natur und pH des Trägers sowie der ultrafeinen Partikel über van der Waals-Wechselwirkung (Physisorption), über ionische Wechselwirkung (Coulomb-Wechselwirkung), vorzugsweise über kovalente Bindungen (Chemisorption).

Die Vorläufersubstanzen für ultrafeine Partikel aus aktivem Material sind üblicherweise ebenfalls auf der Oberfläche des beschichteten Trägermaterials adsorbiert. Durch thermische Behandlung entstehen aus diesen Vorläufern die gewünschten ultrafeinen Partikel aus aktivem Material. Es wird angenommen, dass sich sich dabei Cluster aus aktivem Material bilden, wie dies bereits weiter oben beschrieben wurde. Die Belegung der Oberfläche des beschichteten Trägermaterials mit aktivem Material lässt sich durch den Grad der Beladung mit aktiver Phase steuern.

Die thermische Behandlung erfolgt wie bei der Zersetzung der thermolabilen Substanz bereits beschrieben üblicherweise an Luft oder unter einer künstlichen sauerstoffhaltigen Atmosphäre. Die Behandlungsdauer ist ausreichend lang zu wählen, um aus den adsorbierten Vorläufern aktiver Substanzen ultrafeiner Partikel aus dem gewünschten Material zu erzeugen.

Wenn es sich bei der adsorbierten Substanz um einen Vorläufer handelt, der noch in die aktive Phase umgewandelt werden muss, wird das Material bei der Zersetzungstemperatur des Vorläufers gegebenenfalls unter einer entsprechenden Gasatmosphäre, thermisch behandelt. Die Optimierung der Reaktionsbedingungen wird vom Fachmann anhand von Routineüberlegungen durchgeführt, wobei Ergebnisse aus der thermischen Analyse, vorzugsweise Kalorimetrie und Thermogravimetrie, herangezogen werden.

Typische Behandlungsdauern betragen mehr als sechs, vorzugsweise mehr als zwölf Stunden, insbesondere zwölf bis vierundzwanzig Stunden. Die Auswahl der Temperaturen richtet sich nach der Art der Vorläufersubstanz und der eingesetzten Atmosphäre. Die Temperatur ist so zu wählen, dass durch die Behandlung eine Ausbildung von ultrafeinen Partikeln aus aktiver Substanz erfolgt. Die thermische Behandlung kann zusammen mit dem Schritt der zumindest teilweise Zersetzung der thermolabilen Substanz erfolgen oder auch getrennt, d.h. nach der Zersetzung der thermolabilen Substanz. Typische Behandlungstemperaturen bewegen sich im Bereich von 200 bis 500°C.

Der Größenbereich der aus Vorläufersubstanzen erzeugten Partikel aus aktivem Material lässt sich über die auf der Oberfläche der beschichteten Trägerteilchen aufgebrachte Menge an Vorläufersubstanz steuern. Weitere Verfahrensparameter sind die im Einzelfall gewählte Temperatur sowie gegebenenfalls die Zusammensetzung der bei der Behandlung vorhandenen Atmosphäre, z.B. deren Sauerstoffkonzentration und/oder deren Gehalt an Wasserdampf.

Durch die erfindungsgemäßen Verfahren werden Partikel im Größenbereich von 1 nm bis zu 1 µm aufgebracht bzw. auf der Oberfläche erzeugt. Die Partikel sind an der Oberfläche adsorbiert und durch die Unregelmäßigkeiten der Oberfläche fest mit dem darunter liegenden Träger verankert. Durch diese feste Fixierung können die Teilchen aus aktivem Material nicht agglomerieren, so dass ihre Oberfläche fast zu 100 % zugänglich ist. Dadurch lässt sich der nicht zugängliche Volumenanteil, der sich bei herkömmlichen geträgerten Materialien im Inneren der Partikel befindet, im Sinne einer nachhaltigen Entwicklung auf ein Minimum reduzieren.

Solchermaßen erzeugte Materialien mit einer typischen Beladung von 1 bis 50 Gew. % der aktiven Phase können aufgrund ihrer außerordentlich feinen Verteilung der aktiven Phase herab bis zu Durchmessern von 1 nm den Gehalt bzw. Verbrauch an aktivem Material außerordentlich reduzieren.

Derartige geträgerten Teilchen können als heterogene Katalysatoren eingesetzt werden. Hier ist aufgrund der erhöhten Oberfläche der aktiven Phase eine erhöhte Katalysator-aktivität zu erwarten, welche sich in Vergleich mit Katalysatoren herkömmlicher Struktur in einem - bezogen auf eine feste Katalysatormenge - gesteigerten Umsatz bemerkbar macht.

Ferner lässt sich der Schwermetallgehalt in Polymeren, insbesondere in Elastomeren, um bis zum Faktor zehn reduzieren, das Alterungsverhalten auch unter Temperatureinfluss lässt sich drastisch verbessern und es lässt sich ein mechanisches Wertebild erzielen, das auch mit deutlich erhöhtem Füllgrad klassischer Additive nicht erreicht wird und ohne eine entsprechende Aktivierung des Trägers mit einer thermolabilen Substanz nicht möglich ist.

Der Einsatz ultrafeiner funktionaler Füllstoffe in Polymeren ist primär wünschenswert aus Sicht des Umweltschutzes aber auch im Sinne der Materialersparnis und damit einer nachhaltigen Entwicklung sowie im Sinne homogenerer Materialien. Weiterhin lassen sich mit ultrafeinen Additiven Effekte erzielen, die mit klassischen Additiven nicht zugänglich sind, weil man dort für die mechanischen Eigenschaften in Abhängigkeit von der Konzentration in eine Sättigung hineinläuft, was für ultrafeine Additive nicht zutrifft.

Außerdem ist die Größenabhängigkeit bestimmter Effekte nicht nur quantitativer sondern auch qualitativer Natur, ein Effekt, der aus der heterogenen Katalyse mit dem Begriff "Struktursensitivität" bekannt ist. So können ultrafeine Additive in polymeren Matrizes ihr volles Potential meistens nicht entfalten, weil sie bereits als Agglomerate vorliegen oder beim Mischungsprozess agglomerieren. Die Lösungsansatz zur Umgehung dieser Problematik besteht darin, das Prinzip der Herstellung heterogener Katalysatoren auf Füllstoffe für Polymere zu übertragen. Die ultrafeinen Partikel werden nicht im Mischungsprozess appliziert, sondern auf größere, ohnehin im Polymer enthaltenen Füllstoffe aufgebracht.

Die Erfindung betrifft auch die Verwendung der Teilchenverbunde als Füllstoffe für Polymere oder als Katalysatoren, insbesondere für vernetzbare Polymere sowie als Stabilisatoren in Polymeren.

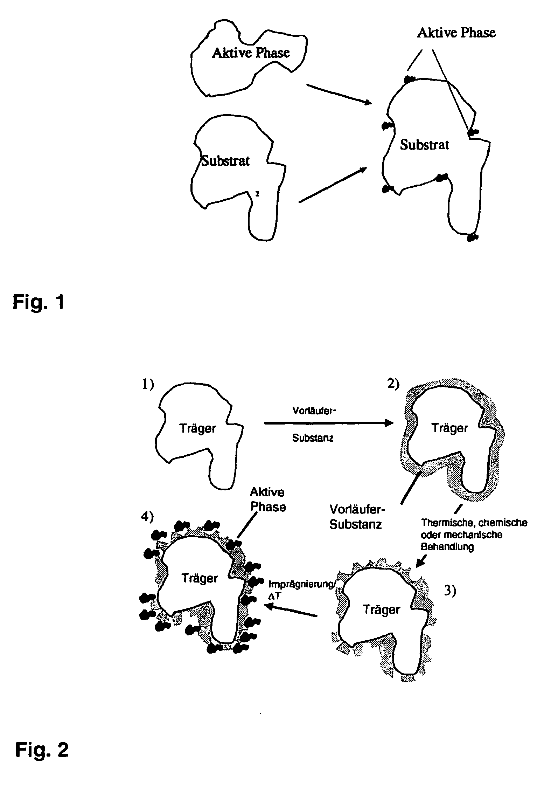

In den Figuren 1 und 2 wird die Erfindung näher erläutert. Eine Begrenzung ist dadurch nicht beabsichtigt.
Figur 1 zeigt das Prinzip der vorliegenden Erfindung im Vergleich zu vorbekannten Lösungen.
Figur 2 zeigt ein Verfahren zur Herstellung der erfindungsgemäßen Teilchenverbunde.

In Figur 1 ist auf der linken Seite der klassische Ansatz gezeigt, während auf der rechten Seite der erfindungsgemäße Ansatz dargestellt ist.

Aus der linken Seite von Figur 1 wird ersichtlich, dass die im klassischen Ansatz eingesetzten Teilchen, wie Füllstoffteilchen (1) und Teilchen aus aktiver Phase (2) ein nicht unbeträchtliches chemisch unwirksames Totvolumen besitzen. Dieses kann durch Fixierung von ultrafeinen Teilchen aus aktivem Material (4) auf einem Trägerteilchen (3) wesentlich reduziert werden. Solchermaßen hergestellte Füllstoffe führen in Polymeren bereits zu sehr guten mechanischen Werten, auch nach einer Hitzealterung gemäß DIN 53 508. Die thermische Behandlung reduziert jedoch zwangsläufig die spezifische Oberfläche des Trägers.

Um dies zu verhindern und über eine erhöhte spezifische Oberfläche des Füllstoffs eine außergewöhnliche Stabilität von Polymeren gegenüber der Hitzealterung zu erzielen, muss das Trägermaterial nach dem erfindungsgemäßen Verfahren mit einer thermolabilen Substanz versehen werden (auf der rechten Seite von Fig. 1 nicht dargestellt). Bei der thermischen Behandlung entsteht dann eine zerklüftete bzw. fraktale Oberfläche, d.h. die spezifische Oberfläche und damit die Aktivität des Füllstoffs wir nochmals erhöht. So kann eine Beständigkeit in der Hitzealterung erreicht werden, die sich nochmals signifikant von der eines geträgerten, aber nicht oberflächenmodifizierten Systems unterscheidet.

In Figur 2 ist eine Ausführungsform des erfindungsgemäßen Verfahrens skizziert. Ein Trägerteilchen (3) wird mit einer thermolabilen Vorläufersubstanz kombiniert. Auf der Oberfläche des Trägerteilchens (3) bildet sich eine Schicht (5) aus der thermolabilen Vorläufersubstanz aus. Durch thermische Behandlung des beschichteten Trägerteilches entsteht eine oberflächlich stark zerklüftete Schicht (6) durch zumindest teilweise Zersetzung der Vorläufersubstanz. Diese wird mit ultrafeinen Teilchen aus aktivem Material (3) imprägniert und es entsteht dadurch der erfindungsgemäße Teilchenverbund.

Das nachfolgende Beispiel erläutert die Erfindung ohne diese zu begrenzen.

### Beispiel 1 und Referenzbeispiel

Zunächst wurde eine Kieselsäure mit einem hydrolysierten Trimethoxysilan imprägniert und dieses damit kovalent an die Oberfläche der Kieselsäure gebunden. Dann wurde eine 0,9-molare Zinkacetat-Lösung mit Essigsäure auf pH 4 eingestellt und nach dem "incipient-wetness" Verfahren auf die imprägnierte Kieselsäure aufgebracht, so dass sich rechnerisch eine ZnO Beladung von 28 % ergab ("erfindungsgemäße Probe"). Die so erhaltene Paste wurde für mindestens 8 Stunden bei 100 °C getrocknet, anschließend an Luft bei 200°C für 12 Stunden und bei 250°C für 2 Stunden kalziniert.

Parallel dazu wurde dieselbe Kieselsäure ohne vorher ein thermolabiles Silan aufzubringen, analog mit Zinkacetat imprägniert und thermisch behandelt (Referenzprobe)

Aus der erfindungsgemäßen Probe wurde ein Teilchenverbund aus Kieselsäure-Trägermaterial mit stark zerklüfteter Oberfläche erhalten, auf der Zinkoxid-Teilchen abgelagert waren. Die Kieselsäureteilchen waren etwa 1 µm groß und die Zinkoxid-Teilchen wiesen Durchmesser von etwa 50 nm auf.

Bei der erfindungsgemäßen Probe betrug die spezifische Oberfläche 120 m²/g, bei der Referenzprobe 105 m²/g, d.h. die erfindungsgemäße Probe wies eine um fast 15 % höhere spezifische Oberfläche auf und dies bei einer wesentlichen gleicher Partikelgröße. Dies ließ sich auch in elektronenmikroskopischen Aufnahmen zeigen; die erfindungsgemäße Probe besaß eine rauere Oberfläche.

### Anwendungsbeispiel 1

In einer Naturkautschuk-Elastomermischung, die 10 Teile herkömmliches ZnO enthielt, wurden 5 Teile dieses ZnO herausgenommen und dafür einmal 5 Teile der erfindungsgemäßen Probe nach Beispiel 1 sowie einmal 5 Teile der Referenzprobe hinzugegeben und der Elastomer-Compound im Innenmischer hergestellt, so dass sich der Netto ZnO-Gehalt von 10 auf 7,5 Teile, also um 25 % reduzierte.

Mit dem gleichen Material ließen mit auf ¼ bis 1/10 reduzierten Nettogehalten an ZnO die im wesentlichen gleichen mechanischen Werte, wie Härte, Rückprall, Zugfestigkeit, Reißdehnung und Druckverformungsrest, realisieren.

## Patentansprüche

1. Teilchenverbund aufgebaut aus Trägerteilchen eines mittleren Durchmessers von weniger als 5 µm, die mit einer Schicht aus oxidischem Material mit irregulärer Oberfläche umhüllt sind, auf der Teilchen aus aktivem Material mit einem mittleren Durchmesser von weniger als 1 µm aufgebracht sind.

2. Teilchenverbund nach Anspruch 1, **dadurch gekennzeichnet, dass** es sich bei dem Trägerteilchen um Kohlenstoff, vorzugsweise um Thermalruße oder Flammruße, oder um oxidische Träger, vorzugsweise um gefällte und/oder pyrogene Kieselsäuren, handelt.

3. Teilchenverbund nach Anspruch 1, **dadurch gekennzeichnet, dass** die Schicht aus oxidischem Material Silizium-, Aluminium-, Erdalkali-, Alkalioxide oder Kombinationen davon enthält, die durch thermische Zersetzung von silizium-, aluminium-, erdalkali-, alkali-aufweisenden Vorläufern enthaltend mindestens einen organischen Rest abgeleitet sind.

4. Teilchenverbund nach Anspruch 3, **dadurch gekennzeichnet, dass** der Vorläufer enthaltend mindestens einen organischen Rest eine silizumorganische Verbindung, inbesondere ein Alkylsilan, ein Fluoralkylsilan und/oder ein Alkylsiliziumchlorid ist.

5. Teilchenverbund nach Anspruch 1, **dadurch gekennzeichnet, dass** es sich bei dem aktiven Material um ein Metall, eine Metalllegierung, einen Halbleiter und/oder deren Verbindungen, insbesondere um Chalkogenide, Nitride oder Carbide von Metallen handelt.

6. Teilchenverbund nach Anspruch 5, **dadurch gekennzeichnet, dass** die Metalle oder Halbleiter ausgewählt werden aus der Gruppe bestehend aus Magnesium, Kalzium, Barium, Titan, Mangan, Eisen, Kupfer, Zink, Silber, Gold, Platin, Zirkonium, Yttrium, Aluminium, Silizium und Zinn.

7. Teilchenverbund nach Anspruch 6, **dadurch gekennzeichnet, dass** es sich bei dem Chalkogenid um ein Oxid handelt, vorzugsweise um Zinkoxid.

8. Teilchenverbund nach Anspruch 1, **dadurch gekennzeichnet, dass** das Trägerteilchen einen mittleren Durchmesser von 0,1 bis 1,0 µm (D₅₀) aufweist und dass die Teilchen aus aktivem Material einen mittleren Durchmesser von 1 bis 1.000 nm (D₅₀) aufweisen und dass das Verhältnis des mittleren Durch-messers der Trägerteilchen zum mittleren Durchmesser der Teilchen aus aktivem Material unterhalb von 1 : 0,5, vorzugsweise zwischen 1 : 0,01 bis 1 : 0,1, beträgt.

9. Verfahren zur Herstellung von Teilchenverbunden nach Anspruch 1 umfassend die Maßnahmen:
i) Erzeugen einer Schicht einer silizium-, aluminium-, erdalkali-, und/oder alkali-aufweisenden Vorläufersubstanz enthaltend mindestens einen organischen Rest auf Trägerteilchen eines mittleren Durchmessers von weniger als 5 µm,
ii) thermische Zersetzung der Vorläufersubstanz auf den beschichteten Trägerteilchen zur Erzeugung einer die Trägerteilchen umhüllenden Schicht aus oxidischem Material mit irregulärer Oberfläche, und
iii) Aufbringen von Teilchen aus aktivem Material mit einem mittleren Durchmesser von weniger als 1 µm oder von Vorläufern dieser Teilchen auf die Oberfläche der beschichteten Trägerteilchen, wobei
iv) im Falle des Aufbringens von Vorläufern von Teilchen aus aktivem Material auf die Oberfläche der beschichteten Trägerteilchen die aktiven Teilchen durch thermische Behandlung des Teilchenverbundes erzeugt werden.

10. Verfahren zur Herstellung von Teilchenverbunden nach Anspruch 1 umfassend die Maßnahmen:
i) Erzeugen einer Schicht einer silizium-, aluminium-, erdalkali- und/oder alkali-aufweisenden Vorläufersubstanz enthaltend mindestens einen organischen Rest auf Trägerteilchen eines mittleren Durchmessers von weniger als 5 µm,
v) Aufbringen von Teilchen aus aktivem Material mit einem mittleren Durchmesser von weniger als 1 µm oder von Vorläufern dieser Teilchen auf die mit Vorläufersubstanz beschichteten Oberfläche der Trägerteilchen, und
vi) thermische Zersetzung der Vodäufersubstanz auf den beschichteten Trägerteilchen zur Erzeugung einer die Trägerteilchen umhüllenden Schicht aus oxidischem Material mit irregulärer Oberfläche, und gegebenenfalls zur Erzeugung von Teilchen aus aktivem Material mit einem mittleren Durchmesser von weniger als 1 µm aus den Vorläufern dieser Teilchen.

11. Verfahren nach einem der Ansprüche 9 oder 10, **dadurch gekennzeichnet, dass** das Imprägnieren in Schritt i) durch Kontakt der Trägerteilchen mit einer Lösung oder Dispersion enthaltend die Vorläufersubstanz erfolgt.

12. Verfahren nach einem der Ansprüche 9 oder 10, **dadurch gekennzeichnet, dass** das Imprägnieren in Schritt i) durch Anteigen der Trägerteilchen mit einer die Vorläufersubstanz enthaltenden Lösung oder Dispersion erfolgt.

13. Verfahren nach einem der Ansprüche 9 oder 10, **dadurch gekennzeichnet, dass** die Temperaturen und die Behandlungsdauer bei der thermische Zersetzung in Schritt ii) oder vi) so gewählt werden, dass die durch die B.E.T Methode ermittelte Oberfläche des umhüllten Trägerteilchens mindestens nach der thermischen Behandlung um mindestens 10 %, vorzugsweise mindestens 25 %, zugenommen hat.

14. Verfahren nach einem der Ansprüche 9 oder 10, **dadurch gekennzeichnet, dass** das Aufbringen der aktiven Teilchen oder deren Vorläufer auf die Oberfläche in Schritt iii) oder in Schritt v) durch Kontakt der beschichteten Trägerteilchen mit einer Lösung oder Dispersion enthaltend die aktiven Teilchen oder deren Vorläufersubstanz erfolgt.

15. Verwendung des Teilchenverbunds nach Anspruch 1 als Füllstoff und/oder als Stabilisator in Polymeren.

16. Verwendung des Teilchenverbunds nach Anspruch 1 als Katalysator für chemische Reaktionen.

17. Verwendung nach Anspruch 15, **dadurch gekennzeichnet, dass** das Polymere ein Elastomer ist und dass das aktive Material Zinkoxid ist.

## Claims

1. Particle composite constructed from carrier particles having an average diameter of less than 5 µm which are enveloped by a layer of oxidic material having an irregular surface to which particles of active material having an average diameter of less than 1 µm have been applied.

2. Particle composite according to Claim 1, **characterized in that** the carrier particles comprise carbon, preferably thermal carbon blacks or flame carbon blacks, or oxidic carriers, preferably precipitated and/or fumed silicas.

3. Particle composite according to Claim 1, **characterized in that** the layer of oxidic material contains silicon, aluminium, alkaline earth metal or alkali metal oxides or combinations thereof which are derived from silicon-, aluminium-, alkaline earth metal- or alkali metal-containing precursors containing at least one organic radical by thermal decomposition.

4. Particle composite according to Claim 3, **characterized in that** the precursor containing at least one organic radical is an organosilicon compound, in particular an alkylsilane, a fluoroalkylsilane and/or an alkylsilicon chloride.

5. Particle composite according to Claim 1, **characterized in that** the active material comprises a metal, a metal alloy, a semiconductor and/or their compounds, in particular chalcogenides, nitrides or carbides of metals.

6. Particle composite according to Claim 5, **characterized in that** the metals or semiconductors are selected from the group consisting of magnesium, calcium, barium, titanium, manganese, iron, copper, zinc, silver, gold, platinum, zirconium, yttrium, aluminium, silicon and tin.

7. Particle composite according to Claim 6, **characterized in that** the chalcogenide comprises an oxide, preferably zinc oxide.

8. Particle composite according to Claim 1, **characterized in that** the carrier particle has an average diameter of 0.1 to 1.0 µm (D₅₀) and **in that** the particles of active material have an average diameter of 1 to 1000 nm (D₅₀) and **in that** the ratio of the average diameter of the carrier particles to the average diameter of the particles of active material is below 1:0.5, preferably between 1:0.01 to 1:0.1.

9. Process for producing particle composites according to Claim 1, comprising the measures of:
i) producing on carrier particles having an average diameter of less than 5 µm a layer of a silicon-, aluminium-, alkaline earth metal- and/or alkali metal-containing precursor substance containing at least one organic radical,
ii) thermally decomposing the precursor substance on the coated carrier particles to produce a layer enveloping the carrier particles which is of oxidic material and has an irregular surface, and
iii) applying particles of active material having an average diameter of less than 1 µm or precursors to these particles to the surface of the coated carrier particles, with the proviso that
iv) in the case of the application of precursors to particles of active material to the surface of the coated carrier particles, the active particles are produced by thermal treatment of the particle composite.

10. Process for producing particle composites according to Claim 1, comprising the measures of:
i) producing on carrier particles having an average diameter of less than 5 µm a layer of a silicon-, aluminium-, alkaline earth metal- and/or alkali metal-containing precursor substance containing at least one organic radical,
v) applying particles of active material having an average diameter of less than 1 µm or precursors to these particles to the surface of the carrier particles, coated with precursor substance, and
vi) thermally decomposing the precursor substance on the coated carrier particles to produce a layer enveloping the carrier particles which is of oxidic material and has an irregular surface, and if appropriate to produce particles of active material having an average diameter of less than 1 µm from the precursors to these particles.

11. Process according to either of the Claims 9 and 10, **characterized in that** the impregnating step i) is effected by contacting the carrier particles with a solution or dispersion containing the precursor substance.

12. Process according to either of the Claims 9 and 10, **characterized in that** the impregnating step i) is effected by pasting the carrier particles with a solution or dispersion containing the precursor substance.

13. Process according to either of the Claims 9 and 10, **characterized in that** the temperatures and the treatment time for the thermal decomposition in step ii) or vi) are chosen such that the BET surface area of the enveloped carrier particle has increased by at least 10% and preferably by at least 25% after the thermal treatment at least.

14. Process according to either of the Claims 9 and 10, **characterized in that** the applying of the active particles or their precursors to the surface in step iii) or in step v) is effected by contacting the coated carrier particles with a solution or dispersion containing the active particles or their precursor substance.

15. Use of the particle composite according to Claim 1 as a filler and/or as stabilizer in polymers.

16. Use of the particle composite according to Claim 1 as a catalyst for chemical reactions.

17. Use according to Claim 15, **characterized in that** the polymer is an elastomer and that the active material is zinc oxide.

## Revendications

1. Composite particulaire constitué de particules supports ayant un diamètre moyen inférieur à 5 µm, qui sont enrobées d'une couche d'un matériau de type oxyde à surface irrégulière, sur laquelle des particules d'une matière active ayant un diamètre moyen inférieur à 1 µm sont appliquées.

2. Composite particulaire selon la revendication 1, **caractérisé en ce que**, pour ce qui concerne la particule support, il s'agit de carbone, de préférence de noirs thermiques ou de noirs de carbone, ou de supports de type oxyde, de préférence de silices précipitées et/ou pyrogènes.

3. Composite particulaire selon la revendication 1, **caractérisé en ce que** la couche en le matériau de type oxyde contient des oxydes de silicium, d'aluminium, de métaux alcalino-terreux, de métaux alcalins, ou des combinaisons de ceux-ci, qui dérivent, par décomposition thermique, de précurseurs comportant du silicium, de l'aluminium, un métal alcalino-terreux, un métal alcalin, et contenant au moins un résidu organique.

4. Composite particulaire selon la revendication 3, **caractérisé en ce que** le précurseur contenant au moins un résidu organique est un composé organique du silicium, en particulier un alkylsilane, un fluoralkylsilane et/ou un chlorure d'alkylsilicium.

5. Composite particulaire selon la revendication 1, **caractérisé en ce que**, pour ce qui concerne la matière active, il s'agit d'un métal, d'un alliage métallique, d'un semi-conducteur et/ou de leurs composés, en particulier de chalcogénures, de nitrures ou de carbures de métaux.

6. Composite particulaire selon la revendication 5, **caractérisé en ce que** les métaux ou des semiconducteurs sont choisis dans le groupe consistant en le magnésium, le calcium, le baryum, le titane, le manganèse, le fer, le cuivre, le zinc, l'argent, l'or, le platine, le zirconium, l'yttrium, l'aluminium, le silicium et l'étain.

7. Composite particulaire selon la revendication 6, **caractérisé en ce que** le chalcogénure est un oxyde, de préférence l'oxyde de zinc.

8. Composite particulaire selon la revendication 1, **caractérisé en ce que** la particule support a un diamètre moyen de 0,1 à 1,0 µm (D₅₀), et que les particules en la matière active ont un diamètre moyen de 1 à 1000 nm (D₅₀), et que le rapport entre le diamètre moyen des particules supports et le diamètre moyen des particules en la matière active est inférieur à 1:0,5, et est de préférence compris entre 1:0,01 et 1:0,1.

9. Procédé de fabrication de composites particulaires selon la revendication 1, comprenant les étapes suivantes :
i) production d'une couche d'une substance précurseur comportant du silicium, de l'aluminium, un métal alcalino-terreux et/ou un métal alcalin, contenant au moins un résidu organique, sur des particules supports ayant un diamètre moyen inférieur à 5 µm,
ii) décomposition thermique de la substance précurseur sur les particules supports revêtues, pour produire une couche en un matériau de type oxyde à surface irrégulière, qui enveloppe les particules supports, et
iii) application de particules en la matière active, ayant un diamètre moyen inférieur à 1 µm, ou de précurseurs de ces particules, sur la surface des particules supports revêtues,
iv) où, dans le cas de l'application de précurseurs de particules en la matière active sur la surface des particules supports revêtues, les particules actives sont produites par traitement thermique du composite particulaire.

10. Procédé de fabrication de composites particulaires selon la revendication 1, comprenant les étapes suivantes :
i) production d'une couche d'une substance précurseur, comportant du silicium, de l'aluminium, un métal alcalino-terreux et/ou un métal alcalin, contenant au moins un résidu organique, sur des particules supports ayant un diamètre moyen inférieur à 5 µm,
v) application de particules en la matière active, ayant un diamètre moyen inférieur à 1 µm, ou de précurseurs de ces particules, sur la surface des particules supports revêtue de la substance précurseur, et
vi) décomposition thermique de la substance précurseur sur les particules supports revêtues, pour produire une couche en un matériau de type oxyde à surface irrégulière, qui enveloppe les particules supports, et éventuellement pour la production de particules en la matière active ayant un diamètre moyen inférieur à 1 µm, à partir des précurseurs de ces particules.

11. Procédé selon l'une des revendications 9 ou 10, **caractérisé en ce que** l'imprégnation de l'étape i) est réalisée par contact des particules supports avec une solution ou une dispersion contenant la substance précurseur.

12. Procédé selon l'une des revendications 9 ou 10, **caractérisé en ce que** l'imprégnation de l'étape i) est réalisée par mise en pâte des particules supports avec une solution ou une dispersion contenant la substance précurseur.

13. Procédé selon l'une des revendications 9 ou 10, **caractérisé en ce que** les températures et la durée de traitement, lors de la décomposition thermique de l'étape ii) ou vi), sont choisies de façon que l'aire des particules supports enveloppées, déterminée par la méthode BET, ait après le traitement thermique augmenté d'au moins 10 %, de préférence d'au moins 25 %.

14. Procédé selon l'une des revendications 9 ou 10, **caractérisé en ce que** l'application des particules actives ou de leurs précurseurs sur la surface dans l'étape iii) ou dans l'étape v) est réalisée par contact des particules supports revêtues avec une solution ou une dispersion contenant les particules actives ou leur substance précurseur.

15. Utilisation du composite particulaire selon la revendication 1 en tant que matière de charge et/ou stabilisant dans des polymères.

16. Utilisation du composite particulaire selon la revendication 1 en tant que catalyseur pour réactions chimiques.

17. Utilisation selon la revendication 15, **caractérisée en ce que** le polymère est un élastomère, et que la matière active est l'oxyde de zinc.
